# EUROPEAN PATENT SPECIFICATION

(11) **EP 4 555 901 B1**
(45) Date of publication and mention of the grant of the patent: **29.07.2026**
(21) Application number: 23875930.2
(22) Date of filing: 10.10.2023
(51) Int. Cl.: A47C 27/14, A47C 7/18, B29C 39/24, B29C 44/00, B29C 44/36, B60N 2/90, C08G 18/00, C08G 18/48, C08G 18/76, C08G 18/79, C08G 101/00, B60N 2/70, C08G 18/20, C08G 18/32, C08G 18/66, C08G 18/72

(54) **SEAT PAD**
SITZPOLSTER
COUSSIN DE SIÈGE

(30) Priority: 13.10.2022 JP 2022165098; 14.02.2023 JP 2023020615
(43) Date of publication of application: 21.05.2025
(73) Proprietor: Inoac Corporation, Nagoya-shi, Aichi 450-0003 (JP)
(72) Inventor: IMAI, Keita, Anjo-shi, Aichi 446-8504 (JP); KONDO, Satoshi, Anjo-shi, Aichi 446-8504 (JP); MIKUNI, Takumi, Anjo-shi, Aichi 446-8504 (JP)
(74) Representative: Kramer Barske Schmidtchen Patentanwälte PartG mbB
(86) International application number: PCT/JP2023/036682
(87) International publication number: WO 2024/080267

(56) References cited:
- WO-A1-2011/043348
- WO-A1-2012/133812
- JP-A- 2012 509 368
- JP-A- 2019 137 810
- US-A1- 2006 084 777
- US-B2- 6 919 384
- US-B2- 7 790 778

## Description

### FIELD OF THE INVENTION

The present invention relates to a seat pad, and more particularly to a seat pad composed of a polyurethane foam that has low both compressive residual strain and wet heat compressive residual strain.

### BACKGROUND OF THE INVENTION

Seats for an automobile are classified into a type in which a seat cushion (seat surface portion) and a seat back (back surface portion) are separated from each other and a type in which they are integrated with each other.

Further, the seat for an automobile generally includes:
(a) a seat pad for receiving a load of an occupant when the occupant sits;
(b) a frame for supporting a seat pad; and
(c) a trim cover covering an outer surface of the seat pad.

A polyurethane foam is generally used in the seat pad.

When an occupant sits on a seat for an automobile including a seat pad, the seat pad is compressed in a load direction in proportion to a magnitude of a load applied to the seat pad. The magnitude of the load applied to the seat pad varies depending on the shape of the seat for an automobile, the inclination of the seat back, the part of the human body in contact with the seat for an automobile, the posture of the occupant, the uneven state of the road surface on which the automobile travels, and the like. Therefore, even when the shape of the seat pad is optimized while it is not in use, residual strain (compressive residual strain, wet heat compressive residual strain) may occur in the seat pad due to stuffiness, temperature, compressive stress, and the like during use, resulting in a seat having poor seating comfort.

In order to solve this problem, various proposals have conventionally been made.

For example, Patent Literature 1 discloses a seat pad that is not intended to reduce compressive residual strain and/or wet heat compressive residual strain, but has different hardnesses along a thickness direction.

Patent Literature 1 describes that varying the hardness of the seat pad along the thickness direction makes it possible to reduce the weight of the seat pad while suppressing a feeling of wobbling.

Patent Literature 2 discloses a soft polyurethane foam obtained by reacting raw materials containing a polymer polyol (N), a polyether polyol (A1), and a polyisocyanate component (B), which satisfy predetermined conditions.

Patent Literature 2 describes that such a method provides a soft polyurethane foam having a 25% compressive hardness of 250 to 280 (N/314 cm²), a moderate hysteresis loss rate, and reduced stress relaxation.

Patent Literature 3 discloses a polyol composition containing a polyether polyol (a1), a vinyl polymer (p), and a foam stabilizer composed of a low molecular weight siloxane (c1), which satisfy predetermined conditions.

Patent Literature 3 describes that the use of such a polyol composition provides an elastic polyurethane foam having a low wet heat residual strain rate.

Patent Literature 4 discloses a polyol component (a) containing a polyether polyol (a1) and a vinyl polymer (p), which satisfy predetermined conditions.

Patent Literature 4 describes that when such a polyol component (a), an organic polyisocyanate component (b), and water are subjected to a foaming reaction in the presence of a catalyst (c), an elastic polyurethane foam having a low wet heat residual strain rate is obtained.

Patent Literatures 3 and 4 describe that, in the case of manufacturing a polyurethane foam, the use of a polyol satisfying specific conditions reduces wet heat residual compressive strain. However, in general, when either the wet heat compressive residual strain or the compressive residual strain is reduced, the other tends to be increased. Patent Literatures 5 and 6 are dealing with seat pads comprising polyurethane foams.

### [CITATION LIST]

### [PATENT LITERATURE]

[Patent Literature 1] JP 2018-048246 A
[Patent Literature 2] JP 2019-031666 A
[Patent Literature 3] JP H09-100336 A
[Patent Literature 4] JP H10-025328 A
[Patent Literature 5] US 6,919,384 B2
[Patent Literature 6] US 7,790,778 B2

### SUMMARY OF THE INVENTION

An object of the present invention is to provide a seat pad composed of a polyurethane foam that has low both compressive residual strain and wet heat compressive residual strain.

Another object of the present invention is to provide a seat pad composed of a polyurethane foam, that has low both compressive residual strain and wet heat compressive residual strain, and having a moderate hardness.

In order to achieve the objects, a seat pad according to claim 1 is provided.

The polyurethane foam preferably has a 25% hardness of 150 N or more.

In the case of manufacturing a polyurethane foam, the use of a raw material mixture containing a polyether polyol A and carbodiimide-modified MDI which satisfy predetermined conditions provides a polyurethane foam that has low both compressive residual strain ε₁ and wet heat compressive residual strain ε₂. Further, optimization of manufacturing conditions provides a polyurethane foam having a 25% hardness of 150 N or more.

It is considered that the compressive residual strain ε₁ is decreased because the rigidity of the polyurethane foam is increased due to the use of a polyether polyol A having a large number of functional groups and a large weight average molecular weight.

It is considered that the wet heat compressive residual strain ε₂ is decreased because the use of a polyether polyol A having a high EO content rate increases water absorbability so that the restoring force by the absorbed water is increased.

Furthermore, it is considered that the hardness is moderately increased because the number of crosslinking points is increased due to the use of a polyether polyol A having a large number of functional groups.

### DETAILED DESCRIPTION OF PREFERRED EMBODIMENTS

Hereinafter, embodiments of the present invention will be described in detail.

### [1. Seat pad]

The seat pad according to the present invention is composed of a polyurethane foam obtained by reacting a raw material mixture containing a polyol component and a polyisocyanate component. The raw material mixture usually further contains a crosslinking agent, a foaming agent, and a catalyst.

### [1.1. Polyurethane foam]

The polyurethane foam constituting the seat pad is obtained by foaming and reacting a raw material mixture satisfying predetermined conditions. Details of a method for manufacturing the polyurethane foam will be described later.

### [1.2. Characteristics]

### [1.2.1. Compressive residual strain ε₁]

The "compressive residual strain ε₁" refers to a value (temperature: 70°C, time: 22 hours, compression rate: 50%) as measured in accordance with JIS K 6400-4.

The seat pad according to the present invention is composed of a polyurethane foam obtained by reacting a raw material mixture satisfying predetermined conditions. Therefore, the polyurethane foam according to the present invention has a low compressive residual strain ε₁. When the manufacturing conditions are optimized, the ε₁ of the polyurethane foam is 5.0% or less. When the manufacturing conditions are further optimized, the ε₁ is 4.0% or less, or 3.5% or less.

### [1.2.2. Wet heat compressive residual strain ε₂]

The "wet heat compressive residual strain ε₂" refers to a value (temperature: 50°C, humidity: 95% RH, time: 22 hours, compression rate: 50%) as measured in accordance with JIS K 6400-4.

The seat pad according to the present invention is composed of a polyurethane foam obtained by reacting a raw material mixture satisfying predetermined conditions. Therefore, the polyurethane foam according to the present invention has a small wet heat compressive residual strain ε₂. When the manufacturing conditions are optimized, the ε₂ of the polyurethane foam is 5.0% or less. When the manufacturing conditions are further optimized, the ε₂ is 4.0% or less, 3.5% or less, 3.0% or less, or 2.0% or less.

### [1.2.3. Strain ratio ε₂/ε₁]

The "strain ratio ε₂/ε₁" refers to a ratio of the wet heat compressive residual strain ε₂ to the compressive residual strain ε₁.

In a conventional polyurethane foam, when either the compressive residual strain ε₁ or the wet heat compressive residual strain ε₂ is reduced, the other is often increased. Therefore, the conventional polyurethane foam often has a strain ratio ε₂/ε₁ of 1.0 or more.

On the other hand, the seat pad according to the present invention is composed of a polyurethane foam obtained by reacting a raw material mixture satisfying predetermined conditions. Therefore, the polyurethane foam according to the present invention is small in both ε₁ and ε₂. In particular, the polyurethane foam according to the present invention is characterized in that the wet heat compressive residual strain ε₂ is smaller than the compressive residual strain ε₁. As a result, the ε₂/ε₁ is less than 1.0. When the manufacturing conditions are further optimized, the ε₂/ε₁ is 0.03 or more and 0.8 or less.

### [1.2.4. 25% Hardness]

The "25% hardness" refers to a value (diameter of a pressurizing plate: 200 mm) as measured in accordance with JIS K 6400-2, Method D.

Conventionally, soft polyurethane foams having good vibration absorbability often have a high density. However, when such a soft polyurethane foam is used as a seat pad, the vehicle weight is increased in some cases. In order to solve this problem, when the density of the soft polyurethane foam is simply reduced, the hardness of the foam reduces. As a result, the repulsion elasticity becomes excessively small, and the cushioning property is deteriorated in some cases.

On the other hand, the seat pad according to the present invention is composed of a polyurethane foam obtained by reacting a raw material mixture satisfying predetermined conditions. Therefore, the polyurethane foam according to the present invention has a moderate hardness. When the manufacturing conditions are optimized, the 25% hardness of the polyurethane foam is 150 N or more. When the manufacturing conditions are further optimized, the 25% hardness is 170 N or more, or 190 N or more. Due to this hardness, even if the seat pad is thinner than the conventional one, the seat pad is excellent in vibration absorbability, has good seating comfort, and can be reduced in weight.

On the other hand, too high a 25% hardness of the polyurethane foam may deteriorate the seating comfort of the seat. Therefore, the 25% hardness is preferably 350 N or less.

### [1.2.5. Hysteresis loss]

The "hysteresis loss" refers to a value as measured in accordance with JIS K 6400-2, Method E.

The seat pad according to the present invention is composed of a polyurethane foam obtained by reacting a raw material mixture satisfying predetermined conditions. Therefore, the polyurethane foam according to the present invention exhibits a moderate hysteresis loss. When the manufacturing conditions are optimized, the hysteresis loss of the polyurethane foam is 5 to 30%.

### [1.2.6. Deflection coefficient]

The "deflection coefficient" refers to a value as measured in accordance with JIS K 6400-2:2012. More specifically, the "deflection coefficient" refers to a value (= F_{65%}/F_{25%}) obtained by dividing a force (F_{65%}) at 65% compression by a force (F_{25%}) at 25% compression when compression is performed, at a constant speed, up to 75% after 75% preliminary compression.

The seat pad according to the present invention is composed of a polyurethane foam obtained by reacting a raw material mixture satisfying predetermined conditions. Therefore, the polyurethane foam according to the present invention has a small deflection coefficient. When the manufacturing conditions are optimized, the deflection coefficient of the polyurethane foam is 2.8 or less. When the manufacturing conditions are further optimized, the deflection coefficient is 2.7 or less, 2.6 or less, or 2.5 or less.

### [1.2.7. Stress relaxation]

The "stress relaxation" refers to a value (load: 196 N, 5 min) as measured in accordance with JIS K 6400-2.

The seat pad according to the present invention is composed of a polyurethane foam obtained by reacting a raw material mixture satisfying predetermined conditions. Therefore, the polyurethane foam according to the present invention has low stress relaxation. When the manufacturing conditions are optimized, the stress relaxation of the polyurethane foam is 2 to 20%.

### [1.2.8. Density]

The "density" refers to a value as measured in accordance with JIS K 7222.

In order to reduce the weight of the seat pad, the density of the polyurethane foam is preferably 68 kg/m³ or less. The density is more preferably 66 kg/m³ or less.

### [2. Method for manufacturing polyurethane foam]

The polyurethane foam constituting the seat pad is obtained by:
(a) preparing a raw material mixture containing a polyol component and a polyisocyanate component; and
(b) reacting the raw material mixture.

Usually, the raw material mixture further contains a crosslinking agent, a foaming agent, and a catalyst.

### [2.1. Main raw material]

### [2.1.1. Polyol component]

The polyol component is one of the main raw materials for the polyurethane foam.

In the present invention, the polyol component contains a polyether polyol A having
(a) an EO content rate of 50 mol% or more,
(b) a number of functional groups of 2. 2 or more and 3.0 or less, and
(c) a weight average molecular weight of 3000 or more.

The polyol component may contain one kind of polyether polyol A satisfying such conditions, or may contain two or more kinds of polyether polyols A satisfying such conditions,
provided that a case is excluded in which the polyol component contains, as the polyether polyol A, only a polyether polyol having
(a) an EO content rate of 50 mol% or more,
(b) a number of functional groups of 2. 2 or more and 3 or less, and
(c) a weight average molecular weight of 3000 or more.

The polyol component further contains a polyether polyol B having
(a) an EO content rate of 30 mol% or less, and
(b) a number of functional groups of 2.0 or more.

The polyol component may contain one kind of polyether polyol B satisfying such conditions, or may contain two or more kinds of polyether polyols B satisfying such conditions.

### [A. Polyether polyol A]

### [A.1. EO content rate]

The "EO content rate (mol%)" of the polyether polyol A refers to a proportion of the number of moles of an ethylene oxide (EO) unit to the total number of moles of alkylene oxide units contained in the polyether polyol A.

The polyether polyol A may contain an alkylene oxide unit other than the EO unit. In this case, the kind of alkylene oxide unit other than the EO unit is not particularly limited, but is preferably a propylene oxide (PO) unit.

The EO content rate of the polyether polyol A mainly affects the wet heat compressive residual strain ε₂. In general, the ε₂ is smaller as the EO content rate is higher. This is considered to be because
(a) since the EO unit is hydrophilic, as the EO content rate is higher, the water absorbability of the polyurethane foam is improved, and the absorbed water facilitates the restoration of compressed and deformed polyurethane foam to its original shape, and
(b) unlike the polyester polyol, the polyether polyol is hardly hydrolyzed in a high humidity environment, and ε₂ is hardly deteriorated.

In order to obtain such an effect, the EO content rate of the polyether polyol A is 50.0 mol% or more. The EO content rate is preferably 60.0 mol% or more, 70.0 mol% or more, 80.0 mol% or more, or 90.0 mol% or more. The EO content rate of the polyether polyol A may be 100.0 mol%.

### [A.2. Number of functional groups]

The number of functional groups of the polyether polyol A affects the compressive residual strain ε₁. In general, the ε₁ is smaller as the number of functional groups increases. This is considered to be because, as the number of functional groups is larger, the number of crosslinking points increases, and the rigidity of the polyurethane foam increases. In order to obtain such an effect, the number of functional groups of the polyether polyol A is 2. 2 or more.

On the other hand, an excessive number of functional groups of the polyether polyol A may excessively increase the hardness of the polyurethane foam. Therefore, the number of functional groups is 3.0 or less. The number of functional groups is preferably 2.9 or less, or 2.8 or less.

### [A.3. Weight average molecular weight]

Too small a weight average molecular weight of the polyether polyol A may deteriorate the compressive residual strain ε₁ and/or the wet heat compressive residual strain ε₂. Therefore, the weight average molecular weight is 3000 or more. The weight average molecular weight is preferably 4000 or more, or 5000 or more.

On the other hand, too large a weight average molecular weight of the polyether polyol A may excessively increase the viscosity of the raw material mixture, leading to deterioration in manufacturability. In addition, the reactivity of the raw material mixture may be reduced, and the tear strength of the polyurethane foam may be reduced. Therefore, the weight average molecular weight is preferably 12000 or less. The weight average molecular weight is more preferably 10000 or less, or 8000 or less.

### [A.4. Hydroxyl value]

Too large a hydroxyl value of the polyether polyol A may deteriorate seating comfort of a seat pad. Therefore, the hydroxyl value is preferably 70 mgKOH/g or less. The hydroxyl value is more preferably 60 mgKOH/g or less, or 55 mgKOH/g or less.

On the other hand, too small a hydroxyl value of the polyether polyol A may excessively harden the polyurethane foam, thereby making it impossible to maintain good seating comfort when the polyurethane foam is used as a seat pad. Therefore, the hydroxyl value is preferably 10 mgKOH/g or more. The hydroxyl value is more preferably 15 mgKOH/g or more, or 20 mgKOH/g or more.

### [B. Polyether polyol B]

### [B.1. EO content rate]

The "EO content rate (mol%)" of the polyether polyol B refers to a proportion of the number of moles of an ethylene oxide (EO) unit to the total number of moles of alkylene oxide units contained in the polyether polyol B.

The polyether polyol B may contain an alkylene oxide unit other than the EO unit. In this case, the kind of alkylene oxide unit other than the EO unit is not particularly limited, but is preferably a propylene oxide (PO) unit.

Too high an EO content rate of the polyether polyol B may reduce the reactivity of the raw material mixture. In addition, the foam state and the air permeability of the foam may deteriorate. Therefore, the EO content rate is 30 mol% or less. The EO content rate is preferably 20 mol% or less, 10 mol% or less, or 5 mol% or less. The EO content rate may be zero.

### [B.2. Number of functional groups]

The number of functional groups of the polyether polyol B has only to be 2.0 or more.

However, too large the number of functional groups of the polyether polyol B may reduce elongation of the polyurethane foam. Therefore, the number of functional groups is preferably 4.0 or less. The number of functional groups is more preferably 3.8 or less, or 3.6 or less.

### [B.3. Weight average molecular weight]

The weight average molecular weight of the polyether polyol B is not particularly limited, and an optimum value can be selected according to the purpose. In general, too small a weight average molecular weight of the polyether polyol B may impair the elongation percentage and flexibility of the polyurethane foam. Therefore, the weight average molecular weight is preferably 1000 or more. The weight average molecular weight is more preferably 2000 or more, or 3000 or more.

On the other hand, too large a weight average molecular weight of the polyether polyol B may excessively increase the viscosity of the raw material mixture, leading to deterioration in manufacturability. Therefore, the weight average molecular weight is preferably 12000 or less. The weight average molecular weight is more preferably 10000 or less, or 8000 or less.

### [2.1.2. Polyisocyanate component]

The polyisocyanate component is the other one of the main raw materials for the polyurethane foam.

In the present invention, the polyisocyanate component contains at least carbodiimide-modified MDI. The polyisocyanate component may contain only carbodiimide-modified MDI, or may further contain a polyisocyanate (hereinafter, this is also referred to as "polyisocyanate B") other than the carbodiimide-modified MDI.

### [A. Carbodiimide-modified MDI]

The carbodiimide (-N=C=N-)-modified MDI is composed of a product produced by condensation, with CO₂ generation, between -NCO groups of diphenylmethane diisocyanate (MDI) in the presence of a catalyst.

The use of the carbodiimide-modified MDI as the polyisocyanate component increases the cushioning property of the polyurethane foam, increases the elasticity, decreases the hysteresis loss, decreases the deflection coefficient, or decreases the stress relaxation.

### [B. Polyisocyanate B]

In the present invention, the type of polyisocyanate B is not particularly limited, and an optimum polyisocyanate B can be selected according to the purpose.

Specific examples of the polyisocyanate B include bifunctional aromatic isocyanates, bifunctional alicyclic isocyanates, bifunctional aliphatic isocyanates, and isocyanates having a functionality of more than 2. The polyisocyanate component may contain any one of these polyisocyanates B, or may contain two or more thereof.

Examples of the bifunctional aromatic isocyanate include
2,4-tolylene diisocyanate, 2,6-tolylene diisocyanate,
m-phenylene diisocyanate, p-phenylene diisocyanate,
4,4'-diphenylmethane diisocyanate (4,4'-MDI),
2,4'-diphenylmethane diisocyanate (2,4'-MDI),
2,2'-diphenylmethane diisocyanate (2,2'-MDI), xylylene diisocyanate,
3,3'-dimethyl-4,4'-biphenylene diisocyanate, and
3,3'-dimethoxy-4,4'-biphenylene diisocyanate, and a mixture thereof may be used.

Examples of the bifunctional alicyclic isocyanate include
cyclohexane-1,4-diisocyanate, isophorone diisocyanate,
dicyclohexylmethane-4,4'-diisocyanate, and
methylcyclohexane diisocyanate.

Examples of the bifunctional aliphatic isocyanate include
butane-1,4-diisocyanate, hexamethylene diisocyanate,
isopropylene diisocyanate, methylene diisocyanate, and lysine isocyanate. Examples of the bi- or higher functional isocyanate include polymeric MDI and tri- or higher functional isocyanate.

Examples of the tri- or higher functional isocyanate include
1-methylbenzol-2,4,6-triisocyanate,
1,3,5-trimethylbenzol-2,4,6-triisocyanate, biphenyl-2,4,4'-triisocyanate,
diphenylmethane-2,4,4'-triisocyanate, methyldiphenylmethane-4, 6,4'-triisocyanate,
4,4'-dimethyldiphenylmethane-2,2',5,5'tetraisocyanate, and
triphenylmethane-4,4',4"-triisocyanate.

### [C. NCO group content rate (NCO%)]

The "NCO group content rate (NCO%)" refers to a proportion of the mass of NCO groups to a total mass of the polyisocyanate component.

The NCO% of the polyisocyanate component is preferably less than 35%, more preferably less than 30%, and still more preferably 29.5% or less.

### [2.1.3. Crosslinking agent]

The raw material mixture may contain a crosslinking agent. The crosslinking agent is preferably a compound having a number of functional groups of at least 3 or more and containing a functional group having an active hydrogen atom (for example, a hydroxyl group, an amino group). The crosslinking agent may be composed only of a compound having a number of functional groups of 3 or more, or may further contain a compound having a number of functional groups of 2 in addition to the compound having a number of functional groups of 3 or more.

The number of functional groups of the crosslinking agent affects the compressive residual strain ε₁. In order to obtain a polyurethane foam having a small compressive residual strain ε₁, the number of functional groups of the crosslinking agent is preferably 3 or more.

On the other hand, an excessively large number of functional groups of the crosslinking agent may excessively increase the hardness of the polyurethane foam. Therefore, the number of functional groups of the crosslinking agent is preferably 6 or less.

The molecular weight of the crosslinking agent is not particularly limited, and an optimum value can be selected according to the purpose. The molecular weight of the crosslinking agent is preferably 1000 or less, 700 or less, or 500 or less.

The molecular weight of the crosslinking agent is preferably 60 or more, 90 or more, or 120 or more.

Examples of the crosslinking agent include glycerin, diethanolamine (DEA), and polyfunctional polyol.

The raw material mixture may contain any one of these crosslinking agents, or may contain two or more thereof.

### [2.1.4. Foaming agent]

The "foaming agent" refers to an additive for generating bubbles in the raw material mixture in the process of resinizing the liquid raw material mixture.

In the present invention, the foaming agent may be either
(a) a physical foaming agent that generates a gas by pressure reduction or heating, or
(b) a chemical foaming agent that generates a gas by thermal decomposition or chemical reaction.

Examples of the physical foaming agent include
(a) hydrocarbons such as cyclopentane, isopentane, and normal pentane, and
(b) halogen-based compounds such as methylene chloride, trichlorofluoromethane, dichlorodifluoromethane, nonafluorobutyl methyl ether, pentafluoroethyl methyl ether, and pentafluoroisopropyl methyl ether.

Examples of the chemical foaming agent include
(a) water that reacts with an isocyanate group to generate CO₂, and
(b) azodicarbonamide that generates nitrogen, carbon monoxide, carbon dioxide, or ammonia gas by thermal decomposition.

The raw material mixture may contain any one of these foaming agents, or may contain two or more thereof.

Among them, the foaming agent is preferably water. When water is used as the foaming agent, CO₂ gas generated by reaction between water and an isocyanate group promotes foaming. The heat of reaction between water and an isocyanate group accelerates curing of the resin.

### [2.1.5. Catalyst]

The "catalyst" refers to a catalyst having a large action of accelerating the resinification reaction and/or a catalyst having a large action of accelerating the foaming reaction.

When a chemical foaming agent (water) is not used as the foaming agent, it is preferable to use a catalyst having a large action of accelerating the resinification reaction.

Examples of the catalyst include an amine-based catalyst and a metal catalyst. The amine-based catalyst is a catalyst having a large action of accelerating both the resinification reaction and the foaming reaction. The metal catalyst is a catalyst having a large action of accelerating the resinification reaction. The raw material mixture may contain any one of these catalysts, or may contain two or more thereof.

Examples of the amine-based catalyst include
N,N-dimethylcyclohexylamine, N,N-dimethylbenzylamine, N,N-dimethylaminoethanol,
N,N',N'-trimethylaminoethylpiperazine, and triethylenediamine.

Examples of the metal catalyst include
(a) tin catalysts such as stannous octoate and dibutyltin dilaurate,
(b) mercury catalysts such as phenylmercuric propionate, and
(c) lead catalysts such as lead octenate.

### [2.2. Sub-raw material]

The raw material mixture may further contain one or more of the following sub-raw materials in addition to the main raw materials described above. Specific examples of the sub-raw material are as follows.

### [2.2.1. Foam stabilizer]

The "foam stabilizer" refers to an additive having an action of uniformizing the size and distribution of bubbles.

The addition of the foam stabilizer to the raw material mixture can provide a polyurethane foam having bubbles uniform in size and distribution. Examples of the foam stabilizer include silicone-based foam stabilizers, fluorine-containing compound-based foam stabilizers, and known surfactants.

### [2.2.2. Flame retardant]

The "flame retardant" refers to an additive having an action of making the polyurethane foam flame-retardant.

Examples of the flame retardant include halogen-based flame retardants, phosphorus-based flame retardants, metal hydroxide-based flame retardants, and antimony-based flame retardants.

### [2.3. Blending amount and content]

### [2.3.1. Blending amount and content of main raw material]

### [A. Blending amount of polyether polyol A]

The "blending amount (parts by mass) of the polyether polyol A" refers to a total mass of the polyether polyol A in the polyol component when the total mass of the polyol component is 100.

In general, as the blending amount of the polyether polyol A is larger, the wet heat compressive residual strain ε₂ of the polyurethane foam decreases. In order to obtain such an effect, the blending amount of the polyether polyol A is preferably 50 parts by mass or more. The blending amount is more preferably 60 parts by mass or more, or 70 parts by mass or more.

An excessive blending amount of the polyether polyol A may deteriorate moldability of the foam. Therefore, the blending amount of the polyether polyol A is preferably 90 parts by mass or less.

### [B. Content of carbodiimide-modified MDI]

The "content (mass%) of the carbodiimide-modified MDI" refers to a proportion of the mass of the carbodiimide-modified MDI to the total mass of the polyisocyanate component.

In general, as the content of the carbodiimide-modified MDI is higher, the stress relaxation and hysteresis loss of the polyurethane foam decrease. In order to obtain such an effect, the content of the carbodiimide-modified MDI is 50 mass% or more. The content is preferably 60 mass% or more, or 7C mass% or more.

The content of the carbodiimide-modified MDI may be 100 mass%. The content of the carbodiimide-modified MDI is preferably 90 mass% or less, or 80 mass% or less.

An NCO content rate of the carbodiimide-modified MDI is preferably 40% or less, 35% or less, or 32% or less, and particularly preferably 30% or less. The NCO content rate is preferably 15% or more, 20% or more, 25% or more, or 27% or more.

### [C. Blending amount of crosslinking agent A]

The "blending amount (parts by mass) of the crosslinking agent A" refers to a mass of the crosslinking agent A when the total mass of the polyol components is 100.

In general, as the content of the crosslinking agent A is higher, the compressive residual strain ε₁ of the polyurethane foam decreases. In order to obtain such an effect, the blending amount of the crosslinking agent A is preferably more than 0 parts by mass. The blending amount is more preferably 1.0 parts by mass or more, or 2.0 parts by mass or more.

On the other hand, an excessive blending amount of the crosslinking agent A may excessively increase the hardness of the polyurethane foam. Therefore, the blending amount of the crosslinking agent A is preferably 10 parts by mass or less. The blending amount is more preferably 8 parts by mass or less, or 6 parts by mass or less.

### [D. Blending amount of polyether polyol B]

The "blending amount (parts by mass) of the polyether polyol B" refers to a total mass of the polyether polyol B in the polyol component when the total mass of the polyol component is 100.

In general, an excessive blending amount of the polyether polyol B relatively decreases the blending amount of the polyether polyol A. As a result, the wet heat compressive residual strain ε₂ of the polyurethane foam may increase. Therefore, the blending amount of the polyether polyol B is preferably less than 50 parts by mass. The blending amount is more preferably 40 parts by mass or less, or 30 parts by mass or less.

### [E. Isocyanate index]

The "isocyanate index" refers to a value obtained by multiplying a ratio of an equivalent of an isocyanate group of the polyisocyanate in the raw material mixture to an equivalent of an active hydrogen group in the raw material mixture by 100.

In the present invention, the isocyanate index is not particularly limited, and an optimum value can be selected according to the purpose. Generally, as the isocyanate index is larger, the compressive residual strain ε₁ of the polyurethane foam decreases due to the increased number of crosslinking points. Therefore, the isocyanate index is preferably 90 or more. The isocyanate index is more preferably 95 or more.

On the other hand, too large an isocyanate index may excessively increase the hardness of the polyurethane foam. Therefore, the isocyanate index is preferably 115 or less.

### [2.3.2. Blending amount of sub-raw material]

In the present invention, the blending amount of the sub-raw material is not particularly limited, and an optimum blending amount can be selected according to the purpose.

### [2.4. Reaction of raw material mixture]

As the foaming in the method for producing a polyurethane foam according to the present invention, either slab foaming or mold foaming can be employed.

The slab foaming is a method in which a composition for producing a polyurethane foam (raw materials for a polyurethane foam) is mixed, discharged onto a belt conveyor, and foamed at normal temperature under atmospheric pressure.

On the other hand, the mold foaming is a method in which raw materials for producing a polyurethane foam (raw materials for a polyurethane foam) are mixed and injected into a cavity of a mold (die), and foamed into a cavity shape. The mold foaming is preferable in that a polyurethane foam having a shape close to the shape of the seat pad is obtained.

In the case of mold molding, the polyisocyanate preferably has a low viscosity, and, for example, a prepolymer type polyisocyanate is not preferable.

### [3. Effects]

In the case of manufacturing a polyurethane foam, the use of a raw material mixture containing a polyether polyol A and carbodiimide-modified MDI which satisfy predetermined conditions provides a polyurethane foam that has low both compressive residual strain ε₁ and wet heat compressive residual strain ε₂. Further, optimization of manufacturing conditions provides a polyurethane foam having a 25% hardness of 150 N or more.

It is considered that the compressive residual strain ε₁ is decreased because the rigidity of the polyurethane foam is increased due to the use of a polyether polyol A having a large number of functional groups and a large weight average molecular weight.

It is considered that the wet heat compressive residual strain ε₂ is decreased because the use of a polyether polyol A having a high EO content rate increases water absorbability so that the restoring force by the absorbed water is increased.

Furthermore, it is considered that the hardness is moderately increased because the number of crosslinking points is increased due to the use of a polyether polyol A having a large number of functional groups.

### [Examples]

### (Examples 1 to 3 and Comparative Examples 1 and 2)

### [1. Preparation of sample]

A polyether polyol, a crosslinking agent, a foaming agent, a catalyst, a foam stabilizer, and a flame retardant were blended at a predetermined ratio to obtain a mixed liquid (hereinafter, also referred to as "component A").

In addition, TDI-80, polymeric MDI, and MDI (NCO content rate: 29%, carbodiimide-modified MDI content: 75 mass%) containing carbodiimide-modified MDI were blended at a predetermined ratio to obtain a mixed liquid (hereinafter, also referred to as "component B").

Further, the component A and the component B were mixed so that the isocyanate index reached a predetermined value to obtain a raw material mixture. Table 1 shows the compositions of the component A and the component B.

**[Table 1]**

| <Composition (parts by mass) of polyol-side component A> | | | | | | | | | |
|---|---|---|---|---|---|---|---|---|---|
| Raw material | Molecular weight | f | EO rate | OHV | Comparative Example 1 | Comparative Example 2 | Example 1 | Example 2 | Example 3 |
| Polyether polyol 1 | 4000 | 2 | 20 | 28 | | 20 | 20 | 20 | |
| Polyether polyol 2 | 4000 | 2 | 80 | 28 | | 80 | 50 | 30 | |
| Polyether polyol 3 | 5000 | 3 | 80 | 35 | | | 30 | 50 | |
| Polyether polyol 4 | 3500 | 3 | 75 | 51 | | | | | 70 |
| Polyether polyol 5 | 5000 | 3 | 15 | 34 | 44.1 | | | | 30 |
| Polyether polyol 6 | 7000 | 3 | 15 | 24 | 14.6 | | | | |
| Polymer polyol | 5000 | 3 | 15 | 24 | 41.3 | | | | |
| | <Manufacturer, product name, etc.> | | | | | | | | |
| Crosslinking agent 1 | Asahi Glass EL-980 polyfunctional polyol | | | | | 3.0 | 3.0 | 3.0 | 3.0 |
| Crosslinking agent 2 | Glycerin | | | | 1.1 | | | | |
| Crosslinking agent 3 | Mitsui Chemicals DEA-80 | | | | 1 | | | | |
| Foaming agent | Water | | | | 2.3 | 2.3 | 2.3 | 2.3 | 2.5 |
| Catalyst 1 | Evonik 33LSI | | | | 0.5 | 0.5 | 0.5 | 0.5 | 0.8 |
| Catalyst 2 | Momentive BL-19 | | | | 0.05 | | | | |
| Silicone foam stabilizer 1 | Momentive L3184J | | | | 0.3 | 2.0 | | | 0.5 |
| Silicone foam stabilizer 2 | Evonik B8715 LF | | | | | | 0.5 | 0.5 | |
| Silicone foam stabilizer 3 | Evonik B8738LF2 | | | | 0.2 | | | | |
| Flame retardant | Daihachi Chemical CR5401 | | | | 0.3 | | | | |
| Total of polyol-side component A | | | | | 105.8 | 107.8 | 106.3 | 106.3 | 106.8 |

| <Composition (parts by mass) of isocyanate-side component B> | | | | | | | | | |
|---|---|---|---|---|---|---|---|---|---|
| | | Comparative Example 1 | | Comparative Example 2 | | Example 1 | | Example 2 | Example 3 |
| Isocyanate | | | | | | | | | |
| TDI-80 | | 80 | | | | | | | |
| Polymeric MDI | | 20 | | 5 | | 5 | | 5 | 5 |
| MDI containing carbodiimide-modified MDI | | | | 95 | | 95 | | 95 | 95 |
| Total of isocyanate-side component B | | 100 | | 100 | | 100 | | 100 | 100 |
| | | Comparative Example 1 | | Comparative Example 2 | | Example 1 | | Example 2 | Example 3 |
| Index [-] | | 85 | | 105 | | 105 | | 105 | 105 |
| Use amount [g] of component B with respect to 100 g of component A | | 49.6 | | 47.6 | | 48.9 | | 49.3 | 56.6 |

Examples 1 and 2 are examples in which a mixture of
(a) polyether polyol 2 (molecular weight: 4000, number of functional groups: 2, EO content rate: 80 mol%) and
(b) polyether polyol 3 (molecular weight: 5000, number of functional groups: 3, EO content rate: 80 mol%) was used as the polyether polyol A.

Example 3 is an example in which only polyether polyol 4 (molecular weight: 3500, number of functional groups: 3, EO content rate: 75 mol%) was used as the polyether polyol A.

The obtained raw material mixture was injected into a die of 400 mm × 400 mm × 100 mm, and foamed and cured at a die temperature of about 60°C. The curing time was set to 5 minutes.

### [2. Test method]

### [2.1. Core density]

A skin layer was removed from the obtained foam to prepare a sample for core density measurement. The obtained sample was used to measure the core density in accordance with JIS K 7222.

### [2.2. 25% Hardness]

The 25% hardness was measured in accordance with JIS K 6400-2 Method D.

### [2.3. Hysteresis loss]

The hysteresis loss was measured in accordance with JIS K 6400-2 Method E.

### [2.4. Deflection coefficient]

The deflection coefficient was measured in accordance with JIS K 6400-2 Method E. The deflection coefficient was determined by dividing 65% compressive load by 25% compressive load.

### [2.5. Stress relaxation]

The stress relaxation was determined in accordance with JIS K 6400-4. The load was set to 196 N, and the pressurization time was set to 5 minutes.

### [2.6. Compressive residual strain ε₁]

The compressive residual strain ε₁ was measured in accordance with JIS K 6400-4. The test temperature was set to 70°C, the test time was set to 22 hours, and the compression rate was set to 50%.

### [2.7. Wet heat compressive residual strain ε₂]

The wet heat compressive residual strain ε₂ was measured in accordance with JIS K 6400-4. The test temperature was set to 50°C, the humidity was set to 95%RH, the test time was set to 22 hours, and the compression rate was set to 50%.

### [3. Results]

The results are shown in Table 2. Table 2 also shows the test piece size and the evaluation test method of each physical property value. The following matters are seen from Table 2.
(1) Comparative Example 1 showed a wet heat compressive residual strain ε₂ of more than 5.0%. This is considered to be because the raw material mixture does not contain the polyether polyol A having an EO content rate of 50 mol% or more.
(2) Comparative Example 2 showed a compressive residual strain ε₁ of more than 5.0%. This is considered to be because the raw material mixture does not contain the polyether polyol A having a number of functional groups of more than 2.0.
(3) All of Examples 1 to 3 showed an ε₁ of 5.0% or less and an ε₂ of 5.0% or less. This is considered to be because the raw material mixture contains the polyether polyol A satisfying predetermined conditions. Examples 1 to 3 showed a density as low as 68 kg/m³ or less, and also excellent deflection coefficient and hysteresis loss.
(4) Examples 1 and 2 were reduced in ε₁ and ε₂ as compared with Example 3.

**[Table 2]**

| Item | Unit | Comparative Example 1 | Comparative Example 2 | Example 1 | Example 2 | Example 3 |
|---|---|---|---|---|---|---|
| Core density | kg/m³ | 56.8 | 64.5 | 65.2 | 65.1 | 64.8 |
| 25% Hardness | N | 224 | 223 | 206 | 194 | 227 |
| Hysteresis loss | % | 18.6 | 14.1 | 15.2 | 15.1 | 27.7 |
| Deflection coefficient | - | 2.99 | 2.36 | 2.65 | 2.61 | 2.41 |
| Stress relaxation | % | 10.7 | 6.2 | 6.2 | 6.5 | 16.3 |
| Compressive residual strain | % | 1.9 | 8.5 | 2.7 | 2.4 | 3.4 |
| Wet heat compressive residual strain | % | 7.2 | 0.2 | 0.4 | 0.6 | 1.6 |

| Item | | Unit | | Evaluation test method | | Others/details |
|---|---|---|---|---|---|---|
| Test piece size | | mm | | (length × width × thickness) | | 400×400×100 |
| Core density | | kg/m³ | | JIS K 7222 | | Measured in core portion from which skin layer has been removed |
| 25% Hardnes | | N | | JIS K 6400-2, Method D | | 400×400×100 |
| Hysteresis loss | | % | | JIS K 6400-2, Method E | | |
| Deflection coefficient | | - | | JIS K 6400-2, Method E | | Value obtained by dividing 65% compression load by 25% compression load |
| Stress relaxation | | % | | JIS K 6400-2 | | Load of 196 N, 5 min |
| Compressive residual strain | | % | | JIS K 6400- 4 | | |
| Wet heat compressive residual strain | | % | | JIS K 6400-4 | | |

Although the embodiments of the present invention have been described in detail above, the present invention is not limited to the above embodiments at all, and various modifications can be made without departing from the scope of the claims.

The seat pad according to the present invention can be used as a seat pad for seats of automobiles, aircraft, and railway vehicles, a sofa, a mattress, and cushioning materials therefor.

## Claims

1. A seat pad comprising a polyurethane foam,
the polyurethane foam having
(A) a compressive residual strain ε ₁ of 5.0% or less, and a wet heat compressive residual strain ε ₂ of 2.0% or less, or
(B) the compressive residual strain ε ₁ of 5.0% or less, the wet heat compressive residual strain *ε* ₂ of 5.0% or less, and an ε ₂/ ε ₁ of 0.03 or more and 0.8 or less,
the polyurethane foam being obtained by reacting a raw material mixture comprising a polyol component and a polyisocyanate component,
the polyol component comprising one or more polyether polyols A having
(a) an EO content rate of 50 mol% or more,
(b) a number of functional groups of 2.2 or more and 3.0 or less, and
(c) a weight average molecular weight of 3000 or more, and
one or more polyether polyols B having
(a) an EO content rate of 30 mol% or less, and
(b) a number of functional groups of 2.0 or more, and
the polyisocyanate component comprising carbodiimide-modified MDI,
wherein a content of the carbodiimide-modified MDI is 50 mass% or more,
where
the "compressive residual strain ε₁" refers to a value (temperature: 70°C, compression rate: 50%) as measured in accordance with JIS K 6400-4,
the "wet heat compressive residual strain ε₂" refers to a value (temperature: 50°C, humidity: 95%RH, compression rate: 50%) as measured in accordance with JIS K 6400-4, and
the "content of the carbodiimide-modified MDI" refers to a proportion of the mass of the carbodiimide-modified MDI to the total mass of the polyisocyanate component.

2. The seat pad according to claim 1, wherein the polyurethane foam has a 25% hardness of 150 N or more,
where the "25% hardness" refers to a value as measured in accordance with JIS K 6400-2, Method D.

3. The seat pad according to claim 1, wherein the polyurethane foam has a 25% hardness of 170 N or more,
where the "25% hardness" refers to a value as measured in accordance with JIS K 6400-2, Method D.

4. The seat pad according to claim 1, wherein the polyurethane foam has a 25% hardness of 190 N or more,
where the "25% hardness" refers to a value as measured in accordance with JIS K 6400-2, Method D.

5. The seat pad according to claim 1, wherein the polyurethane foam has a hysteresis loss of 5% or more and 30% or less,
where the "hysteresis loss" refers to a value as measured in accordance with JIS K 6400-2, Method E.

6. The seat pad according to claim 1, wherein the polyurethane foam has a deflection coefficient of 2.8 or less,
where the "deflection coefficient" refers to a value as measured in accordance with JIS K 6400-2:2012.

7. The seat pad according to claim 1, wherein the polyurethane foam has a stress relaxation of 2% or more and 20% or less,
where the "stress relaxation" refers to a value as measured in accordance with JIS K 6400-2.

8. The seat pad according to claim 1, wherein the raw material mixture further comprises a crosslinking agent having a number of functional groups of 3 or more to 6 or less and a molecular weight of 60 or more to 1000 or less.

## Patentansprüche

1. Sitzpolster mit einem Polyurethanschaumstoff, der
(A) eine bleibende Verformung ε₁ von 5,0% oder weniger und eine bleibende Feuchtwärmeverformung ε₂ von 2,0% oder weniger, oder
(B) die bleibende Verformung ε₁ von 5,0% oder weniger, die bleibende Feuchtwärmeverformung ε₂ von 5,0% oder weniger und ein ε₂/ε₁ von 0,03 oder mehr und 0,8 oder weniger aufweist,
welcher Polyurethanschaumstoff durch Reagieren einer Rohmaterialmischung mit einer Polyol-Komponente und einer Polyisocyanat-Komponente erhalten wird,
welche Polyol-Komponente ein oder mehrere Polether-Polyole A mit
(a) einem EO-Gehalt von 50 Mol% oder mehr,
(b) einer Anzahl funktionaler Gruppen von 2,2 oder mehr und 3,0 oder weniger, und
(c) einem gewichtsmittleren Molekulargewicht von 3000 oder mehr, und
ein oder mehrere Polyether-Polyole B mit
(a) einem EO-Gehalt von 30 Mol% oder weniger, und
(b) einer Anzahl funktionaler Gruppen von 2,0 oder mehr aufweist, und
welche Polyisocyanat-Komponente Carbodiimid-modifiziertes MDI aufweist,
bei dem ein Gehalt des Carbodiimid-modifizierten MDI 50 Masse% oder mehr beträgt,
bei dem
die "bleibende Verformung ε₁" einen Wert (Temperatur: 70°C, Kompressionsrate: 50%), wie er gemäß JIS K 6400-4 gemessen wird, bezeichnet,
die "bleibende Feuchtwärmeverformung ε₂" einen Wert (Temperatur: 50°C, Feuchtigkeit:
95%RH, Kompressionsrate: 50%), wie er gemäß JIS K 6400-4 gemessen wird, bezeichnet,
und
der "Gehalt des Carbodiimid-modifizierten MDI" einen Anteil der Masse des Carbodiimid-modifizierten MDI an der Gesamtmasse der Polyisocyanat-Komponente bezeichnet.

2. Sitzpolster nach Anspruch 1, bei dem der Polyurethanschaumstoff eine 25%-Härte von 150 N oder mehr aufweist,
bei dem die "25%-Härte" einen Wert, wie er gemäß JIS K 6400-2, Verfahren D gemessen wird, bezeichnet.

3. Sitzpolster nach Anspruch 1, bei dem der Polyurethanschaumstoff eine 25%-Härte von 170 N oder mehr aufweist,
bei dem die "25%-Härte" einen Wert, wie er gemäß JIS K 6400-2, Verfahren D gemessen wird, bezeichnet.

4. Sitzpolster nach Anspruch 1, bei dem der Polyurethanschaumstoff eine 25%-Härte von 190 N oder mehr aufweist,
bei dem die "25%-Härte einen Wert, wie er gemäß JIS K 6400-2, Verfahren D gemessen wird, bezeichnet.

5. Sitzpolster nach Anspruch 1, bei dem der Polyurethanschaumstoff einen Hystereseverlust von 5% oder mehr und 30% oder weniger aufweist,
bei dem der "Hystereseverlust" einen Wert, wie er gemäß JIS K 6400-2, Verfahren E gemessen wird, bezeichnet.

6. Sitzpolster nach Anspruch 1, bei dem der Polyurethanschaumstoff einen Verformungskoeffizienten von 2,8 oder weniger aufweist,
bei dem der "Verformungskoeffizient" einen Wert, wie er gemäß JIS K 6400-2:2012 gemessen wird, bezeichnet.

7. Sitzpolster nach Anspruch 1, bei dem der Polyurethanschaumstoff eine Belastungsrelaxation von 2% oder mehr und 20% oder weniger aufweist,
bei der die "Belastungsrelaxation" einen Wert, wie er gemäß JIS K 6400-2 gemessen wird, bezeichnet.

8. Sitzpolster nach Anspruch 1, bei dem die Rohmaterialmischung ferner ein Vernetzungsmittel mit einer Anzahl funktionaler Gruppen von 3 oder mehr bis 6 oder weniger und einem Molekulargewicht von 60 oder mehr bis 1000 oder weniger aufweist.

## Revendications

1. Rembourrage de siège comprenant une mousse de polyuréthane,
ladite mousse de polyuréthane présentant
(A) une déformation rémanente après compression ε₁ de 5,0 % ou moins, et une déformation rémanente après compression sous chaleur humide ε₂ de 2,0 % ou moins, ou
(B) la déformation rémanente après compression ε₁ de 5,0 % ou moins, la déformation rémanente après compression sous chaleur humide ε₂ de 5,0 % ou moins, et un rapport ε₂ / ε₁ de 0,03 ou plus et 0,8 ou moins,
la mousse de polyuréthane étant obtenue par réaction d'un mélange de matières premières comprenant un composant polyol et un composant polyisocyanate,
le composant polyol comprenant un ou plusieurs polyéther-polyols A ayant
a) une teneur en EO de 50 % en moles ou plus,
b) un nombre de groupes fonctionnels de 2,2 ou plus et 3,0 ou moins, et
c) un poids moléculaire moyen en poids de 3000 ou plus, et
un ou plusieurs polyéther-polyols B ayant
a) une teneur en EO de 30 % en moles ou moins, et
b) un nombre de groupes fonctionnels de 2,0 ou plus, et
le composant polyisocyanate comprenant du MDI modifié par du carbodiimide, dans lequel une teneur en MDI modifié par du carbodiimide est de 50 % en masse ou plus,
où
la « déformation rémanente après compression ε₁ » désigne une valeur (température : 70 °C, taux de compression : 50 %) mesurée conformément à la norme JIS K 6400-4, la « déformation rémanente après compression à chaud humide ε₂ » désigne une valeur (température : 50 °C, humidité : 95 % HR, taux de compression : 50 %) mesurée conformément à la norme JIS K 6400-4, et
la « teneur en MDI modifié par du carbodiimide » désigne une proportion de la masse du MDI modifié par du carbodiimide par rapport à la masse totale du composant polyisocyanate.

2. Rembourrage de siège selon la revendication 1, dans lequel la mousse de polyuréthane présente une dureté à 25 % de 150 N ou plus,
où la « dureté à 25 % » désignant une valeur mesurée conformément à la norme JIS K 6400-2, méthode D.

3. Rembourrage de siège selon la revendication 1, dans lequel la mousse de polyuréthane présente une dureté à 25 % de 170 N ou plus,
où la « dureté à 25 % » désigne une valeur mesurée conformément à la norme JIS K 6400-2, méthode D.

4. Rembourrage de siège selon la revendication 1, dans lequel la mousse de polyuréthane présente une dureté à 25 % de 190 N ou plus,
où la « dureté à 25 % » désigne une valeur mesurée conformément à la norme JIS K 6400-2, méthode D.

5. Rembourrage de siège selon la revendication 1, dans lequel la mousse de polyuréthane présente une perte par hystérésis de 5 % ou plus et 30 % ou moins,
où la « perte par hystérésis » désigne une valeur mesurée conformément à la norme JIS K 6400-2, méthode E.

6. Rembourrage de siège selon la revendication 1, dans lequel la mousse de polyuréthane présente un coefficient de déformation de 2,8 ou moins,
où le « coefficient de déformation » désignant une valeur mesurée conformément à la norme JIS K 6400-2:2012.

7. Rembourrage de siège selon la revendication 1, dans lequel la mousse de polyuréthane présente une relaxation de contrainte de 2 % ou plus et 20 % ou moins,
où la « relaxation de contrainte » désigne une valeur mesurée conformément à la norme JIS K 6400-2.

8. Rembourrage de siège selon la revendication 1, dans lequel le mélange de matières premières comprend en outre un agent de réticulation ayant un nombre de groupes fonctionnels de 3 ou plus à 6 ou moins et un poids moléculaire de 60 ou plus et 1000 ou moins.
